# EUROPEAN PATENT SPECIFICATION

(11) **EP 2 952 398 B1**
(45) Date of publication and mention of the grant of the patent: **29.08.2018**
(21) Application number: 15169987.3
(22) Date of filing: 29.05.2015
(51) Int. Cl.: B60T 7/20, B60T 11/28, B60T 15/60

(54) **VALVE ASSEMBLY**
VENTILVORRICHTUNG
DISPOSITIF DE SOUPAPE

(30) Priority: 03.06.2014 IT MO20140161
(43) Date of publication of application: 09.12.2015
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- DE-A1- 3 110 661
- US-A- 2 203 042

## Description

The present invention relates to a valve assembly, particularly for the management of the braking of a trailer, according to the preamble of claim 1. Such a valve assembly is known from US 2203042 A. As is known, to date towing vehicles are connected to the relative trailer by means of a connection device comprising a male coupling associated with the towing vehicle and a relative female coupling associated with the trailer.

More in particular, such connection device allows to put the braking system of the towing vehicle in communication with that of the trailer, so that the braking of the towing vehicle by the operator also causes the braking of the towed trailer.

The braking system of the trailer is then operated by the braking system of the prime mover in order to synchronize the braking forces acting on same.

Some recently introduced regulations require the connection device between the towing vehicle and its trailer to be provided with a pair of male couplings able to be inserted inside a pair of relative female couplings as well as the presence of an electrical connection to control the braking system of the trailer and to transmit to the towing vehicle any alarm signals from the trailer itself.

In particular, the female couplings are connectable, respectively, to a control line able to supply the braking system of the trailer and to an additional line able to deactivate the automatic and/or parking brake of the trailer itself.

The main aim of the present invention is to provide a single valve assembly, which is connectable to the female couplings of the trailer, and which is able to perform several safety or emergency functions.

Within this aim, one object is to allow the emergency braking of the trailer using a hydraulic accumulator.

Another object of the present invention is to allow the unloading of the pressures present along the control line and the additional line of the trailer when the latter is detached from the towing vehicle so as to allow the subsequent insertion of the male couplings within the relative female couplings.

Another object of the present invention is to provide a valve assembly which allows to overcome the mentioned drawbacks of the prior art within the ambit of a simple, rational, easy, effective to use and affordable solution.

The objects stated above are achieved by the present valve assembly according to claim 1.

Other characteristics and advantages of the present invention will become better evident from the description of a preferred but not exclusive embodiment of a valve assembly, illustrated by way of an indicative, but non-limiting example in the accompanying drawings, in which:
Figure 1 is a sectional view of a valve assembly according to the invention with the activation element in normal operating position;

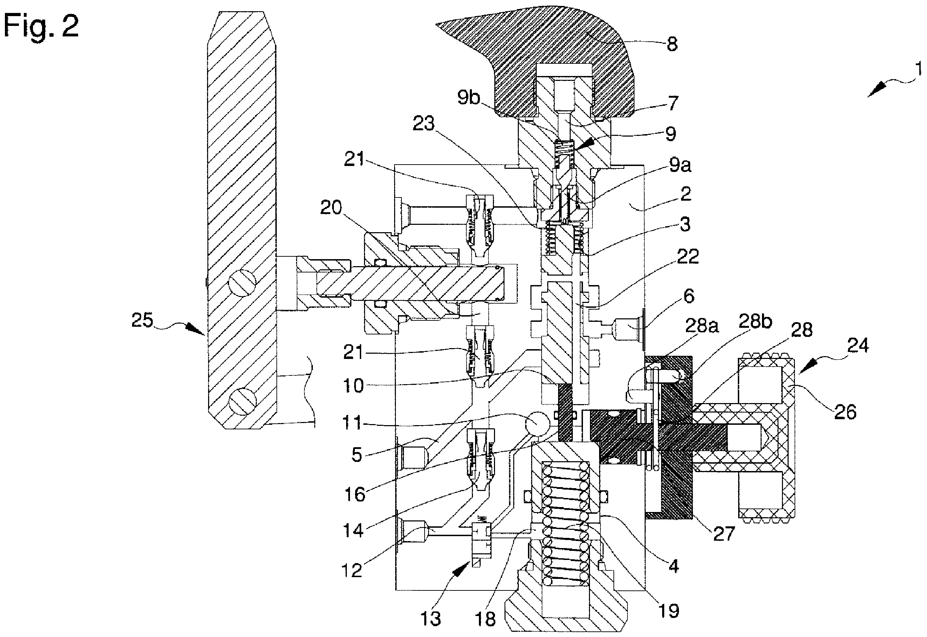

Figure 2 is a sectional view of the valve assembly of Figure 1 with the activation element in emergency position;

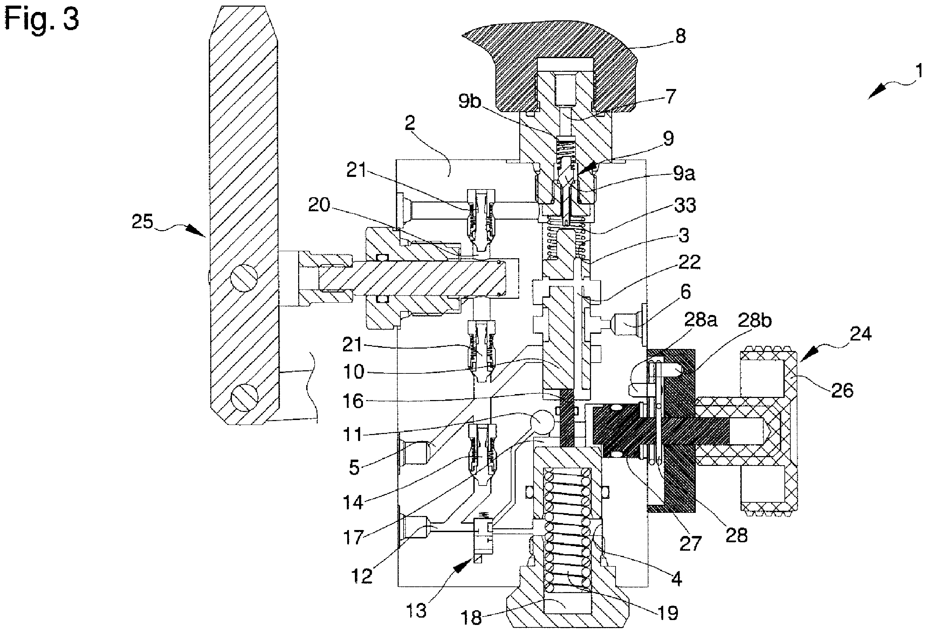

Figure 3 is a sectional view of the valve assembly of Figure 1 with the command means in the first working position;

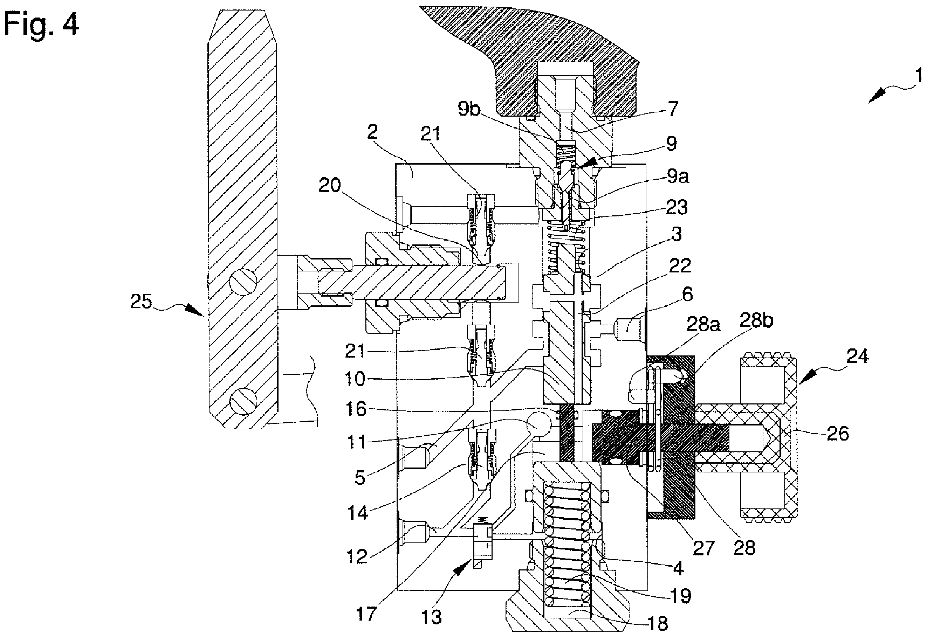

Figure 4 is a sectional view of the valve assembly of Figure 1 with the command means in the second working position.

With particular reference to such figures, globally indicated with the reference number 1 is a valve assembly connectable to a trailer comprising a first and a second female coupling (not shown in the illustrations) in turn connectable to a first and to a second male coupling, respectively (these too not shown in the illustrations) associated with the towing vehicle. More in detail, the first female coupling is communicating with a control line, able to receive a work fluid at a first pressure as a result of the connection to the first male coupling for the supply of the braking system of the trailer, and the second female coupling is communicating with at least an additional line, able to receive a work fluid at a second pressure as a result of the connection of the second female coupling to the second male coupling to control the parking and/or automatic brake of the trailer itself, and with at least a by-pass line communicating with an unloading line. Valve means are also provided able to put the additional line in communication with the by-pass line as a result of the exit of the second male coupling from the second female coupling.

The assembly 1 comprises a body 2 within which are defined at least a first seat 3 and at least a second seat 4.

The first seat 3 is communicating with at least a control channel 5, with at least a braking channel 6 and with at least a supply channel 7 connected to a hydraulic accumulator 8 (shown partially in the figures).

The control channel 5 is connectable to the control line of the braking system of the trailer, the braking channel 6 is connectable to the braking system of the trailer and along the supply channel 7 are provided valve means 9 able to open/close the supply channel itself.

More particularly, the valve means 9 comprise a shutter 9a movable between a closing configuration and an opening configuration of the supply channel 7 and elastic means 9b able to counteract the displacement of the shutter 9a towards the opening configuration.

A spool 10 is accommodated movable within the first seat 3.

Between the spool 10 and the body 2 are also placed elastic means 23 able to counteract the displacement of the spool itself towards the valve means 9. The elastic means 23 are then able to push the spool 10 towards the second seat 4.

The second seat 4, in turn, is communicating with at least an additional channel 11 and with an unloading channel 12.

The additional channel 11 is connectable to the additional line of the trailer for the deactivation of the parking and/or automatic brake of the trailer itself and the unloading channel 12 may be connectable to a reservoir, of the dynamic type or not, or without further connections. As mentioned above, the unloading channel 12 is intended to be put in communication with the additional channel 11, through the by-pass channel of the second female coupling, as a result of the exit of the second male coupling from its second female coupling.

Suitably, the unloading channel 12 is communicating with the control channel 5 and between them is placed at least a one-way valve 14, which is able to prevent the transit of the work fluid from the control channel 5 to the unloading channel 12.

Within the second seat 4 is accommodated movable an activation element 15, which is able to interact with the spool 10 to move it along the first seat 3. More particularly, the activation element 15 is the type of a glass-shaped piston, which interacts with the spool 10 by means of a cylinder 16 having one extremity able to rest on the activation element 15 and the opposite extremity on the spool 10. Around the cylinder 16 is arranged at least a sealing element able to isolate hydraulically the first and the second seat 3 and 4 to one another.

Within the second seat 4 are defined at least a first thrust chamber 17 communicating with the additional channel 11 and acting on the activation element 15 and at least a second thrust chamber 18 acting on the activation element itself on the opposite side of the first thrust chamber 17.

Elastic means 19 are also provided able to act on the activation element 15 in contrast to the action of the first thrust chamber 17.

More in detail, the first thrust chamber 17 is able to push the activation element 15 away from the first seat 3, the second thrust chamber 18 and the elastic means 19 acting in the opposite direction.

In the particular embodiment shown in the illustrations, the thrust areas of the activation element 15 on which the first and the second thrust chamber 17 and 18 act are substantially equivalent to one another.

The assembly 1 also comprises a solenoid valve 13 operatively connectable to the supply of the towing vehicle.

The solenoid valve 13 is placed between the additional channel 11, the unloading channel 12 and the second thrust chamber 18 and is movable between an inactive configuration, wherein it puts the second thrust chamber 18 in communication with the additional channel 11, isolating it (the second thrust chamber) from the unloading channel 12, and an active configuration, wherein it puts the second thrust chamber 18 in communication with the unloading channel 12, isolating it (the second thrust chamber) from the additional channel 11.

The solenoid valve 13 is positioned in the inactive configuration as a result of the uncoupling of the trailer from the towing vehicle or if the latter does not send any electric signal to the trailer itself.

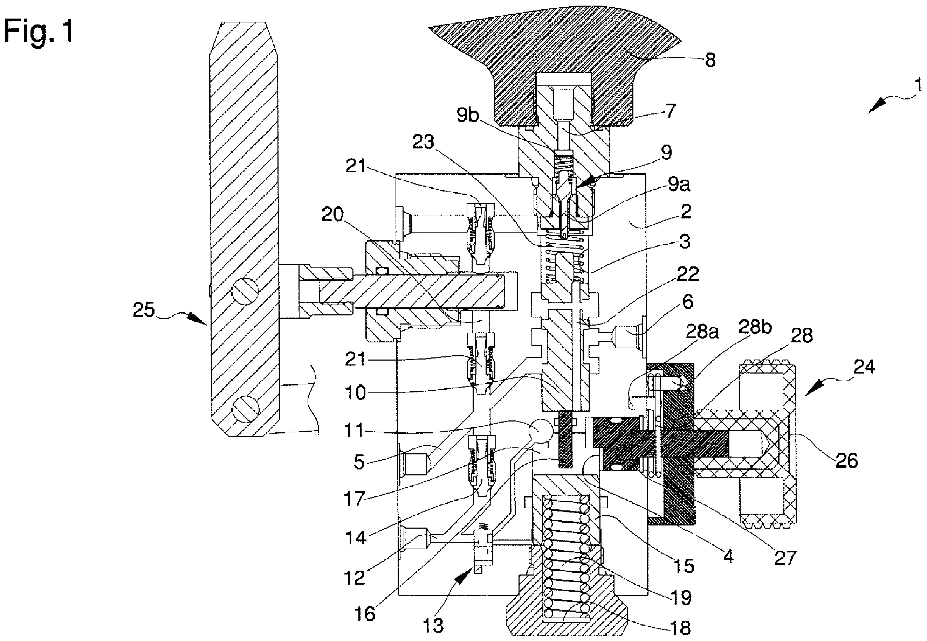

The activation element 15 is movable between a normal operating position, which corresponds to the condition wherein the male couplings are inserted within the relative female couplings, the solenoid valve 13 is in the active configuration, and wherein the additional channel 11 is under pressure and isolated from the unloading channel 12. The figure 1 shows the normal operating position of the activation element 15 except for the solenoid valve 13 which, although as described is in the active configuration, is schematically shown in the inactive configuration.

In this position, the activation element 15 moves in contrast to the elastic means 19 due to the pressure present in the first thrust chamber 17, the second thrust chamber 18 being connected to the unloading channel 12. The second thrust chamber 18 can be unloaded in the control channel 5, by means of the one-way valve 14, in case this is at a lower pressure than the one present in the unloading channel 12, e.g. as a result of the interruption of the braking in the towing vehicle.

It follows that the spool 10 moves to approach the second seat 4 and reaches a corresponding position wherein it puts the control channel 5 in communication with the braking channel 6.

In the embodiment represented in the figures, in the normal operating position the activation element 15 is moved away from the cylinder 16 and the spool 10 is subject to the only thrust of the elastic means 23.

The accumulator 8 is loaded when the pressure of the work fluid present along the control channel 5 is greater than that present in the accumulator itself. An auxiliary channel 20 is in fact provided communicating on one side with the control channel 5 and on the other with the accumulator 8, and along which are arranged one-way valve means 21 able to prevent the transit of the work fluid from the accumulator 8 to the control channel 5, through which a part of the work fluid flowing through the control channel itself is conveyed into the accumulator 8. Suitably, the auxiliary channel 20 is connectable to a pressure switch (not shown in the illustrations).

Advantageously, the assembly 1 also comprises an electric device (not shown in the illustrations) operatively connected to the pressure switch, to the solenoid valve 13 and to the supply of the towing vehicle and able to maintain the solenoid valve 13 in the active configuration until the pressure in the accumulator 8 reaches a predefined value.

In the preferred embodiment shown in the illustrations, the auxiliary channel 20 is put in communication with the first seat 3 and the work fluid incoming from the same enters into the accumulator 8 leaking through the valve means 9. To minimize the losses due to leakage from the accumulator 8 two valve means 9 can be used arranged in series,

Alternative embodiments cannot however be ruled out wherein the auxiliary channel 20 is put in communication with the supply channel 7 downstream of the valve means 9 with respect to the incoming direction of the work fluid towards the accumulator 8.

The activation element 15 has then at least an emergency position wherein, as a result of the decrease in pressure in the additional channel 11 (e.g. due to the engagement of the parking brake of the towing vehicle) or the connection of the latter with the unloading channel 12 (e.g. due to the exit of the second male coupling from the second female coupling) or the displacement of the solenoid valve 13 to the inactive configuration, the activation element itself is moved by the action of the elastic means 19 to the first seat 3. In this operating condition, in fact, either the pressure present in the first thrust chamber 17 is reset (engagement of the parking brake of the towing vehicle) or it is substantially equivalent to that present in the second thrust chamber 18 (exit of the second male coupling from the second female coupling), whereby the only action performed on the activation element 15 is that of the elastic means 19.

In this emergency position, as a result of the displacement of the activation element 15, the spool 10 reaches a corresponding position within the first seat 3 wherein it interacts with the valve means 9 to open the supply channel 7 and wherein the braking channel 6 is isolated from the control channel 5 and is put in communication with the supply channel itself. The work fluid contained in the accumulator 8 therefore flows out through the supply channel 7 and goes to supply the braking system of the trailer by means of the braking channel 6.

More particularly, the supply channel 7 is put in communication with the braking channel 6 by means of a duct 22 defined within the spool 10.

It appears clear how, as a result of the activation of the solenoid valve 13, the second thrust chamber 18 is put in communication with the unloading channel 12 and consequently the activation element 15 is pushed in contrast to the elastic means 19 moving to the normal operating position.

Advantageously, the assembly 1 comprises manual command means 24, which are operable to command the displacement of the activation element 15 to at least a predefined position. The command means 24 are able to be operated as a result of the exit of the male couplings from the relative female couplings.

More particularly, the command means 24 are movable between a neutral position, wherein the activation element 15 is free to move between the normal operating position and the emergency position, and at least a first working position, wherein the activation element 15 is pushed in contrast to the elastic means 19, with respect to the emergency position it takes as a result of the connection between the additional channel 11 and the unloading channel 12 as a consequence of the exit of the male couplings from the female couplings, thus causing the displacement of the spool 10 which reaches a relative position in which it interrupts the connection between the braking channel 6, the control channel 5 and the supply channel 7.

Preferably, the assembly 1 comprises pumping means 25 arranged along the auxiliary channel 20 and operable, with the command means 24 in the first working position, to suck the work fluid present in the control channel 5 and send it inside the accumulator 8.

It is easy to understand how the pumping means 25 are also able to suck the work fluid present along the additional channel 11 in the case of the latter being put in communication with the unloading channel 12 as a result of the exit of the second male coupling from its second female coupling; as mentioned above, in fact, the unloading channel 12 is in communication with the control channel 5.

Conveniently, the pumping means 25 are of the manual type and are placed between the one-way valve means 21, which comprise at least two one-way valves able to permit the suction of the work fluid from the control channel 5 and send the same to the accumulator 8 but not vice versa.

Advantageously, the command means 24 can also be moved to a second working position, wherein the activation element 15 is pushed further in contrast to the elastic means with respect to the first working position thus causing the displacement of the spool 10 to a relative position in which it puts the control channel 5 in communication with the braking channel 6.

In this second working position of the command means 24, the pumping means 25 are also operable to suck the work fluid present along the braking channel 6, still passing through the control channel 5, and send it into the accumulator 8.

Preferably, the position taken by the activation element 15 in the normal operating position is different from that taken by the same in the second working position of the command means 24.

More particularly, the normal operating position corresponds to an end-of-stroke position of the activation element 15 within the second seat 4, whereas the position taken by the activation element itself with the command means 24 in the second working position is spaced away from this end-of-stroke position. The other end-of-stroke position of the activation element 15 corresponds to the emergency position.

In the preferred embodiment shown in the figures, the command means 24 comprise at least a knob 26 arranged externally to the body 2 and movable in rotation with respect to it, where this knob 26 is connected to a cam element 27 which interacts with the activation element 15.

Suitably, further elastic means 28 are associated with the command means 24 and are able to apply on them a torque in contrast to the displacement of the command means themselves from the neutral position to the above-mentioned working positions.

More in detail, the further elastic means 28 are the type of a pin spring having a first pin 28a locked together with the body 2 and a second pin 28b locked together with the knob 26, the second pin 28b being able to go back to the initial position as a result of the rotation of the knob itself.

It follows, therefore, that if the operator leaves inadvertently the command means 24 in the first or second working position even as a result of the insertion of the male couplings within the relative female couplings (and therefore of the activation of the solenoid valve 13), due to the pressure present in the additional channel 11, the activation element 15 is further moved up to reach the end-of-stroke position corresponding to the normal operating position and thereby releasing the command means 24 which, due to the action applied by the further elastic means 28, go back to their neutral position.

It has in practice been observed how the described invention achieves the proposed objects and in particular the fact is underlined that the assembly according to the invention allows to supply the braking system of a trailer in emergency conditions by means of a hydraulic accumulator.

The valve assembly making the subject of the present invention also allows to easily unload the pressure present along the various lines of the trailer, or along the control line, the additional one and the braking one, so as to allow the subsequent connection of the male couplings to their female couplings.

## Claims

1. Valve assembly (1), particularly for trailers comprising a first and a second female coupling connectable, respectively, to a first and to a second male coupling associated with the towing vehicle, where the first female coupling is communicating with a control line of the braking system of the trailer itself and where the second female coupling is communicating with at least an additional line acting on the parking and/or automatic brake of the trailer and with at least a by-pass line communicating with an unloading line, valve means being provided able to put in communication the additional line with the by-pass line as a result of the exit of the second male coupling from the second female coupling, comprising:
- a body (2) within which is defined a first seat (3) communicating with:
• at least a control channel (5) connectable to said control line of the trailer;
• at least a braking channel (6), connectable to the braking system of the trailer;
• at least a supply channel (7) connected to a hydraulic accumulator (8), valve means (9) being provided able to open/close said supply channel (7); and at least a second seat (4) communicating with:
• at least an additional channel (11) connectable to said additional line of the trailer;
• at least an unloading channel (12) connectable to said unloading line of the trailer;
**characterized in that** it comprises:
- a valve member (10) accommodated movable within said first seat (3);
- at least an activation element (15) accommodated movable within said second seat (4) and able to interact with said valve member (10), to move it along said first seat (3), within said second seat (4) being defined at least a first thrust chamber (17) communicating with said additional channel (11) and acting on said activation element (15) and at least a second thrust chamber (18) acting on said activation element (15) on the opposite side of said first thrust chamber (17), elastic means (19) being also provided able to act on the activation element itself in contrast to the action of said first thrust chamber (17);
- at least a solenoid valve (13) connectable to the supply of the towing vehicle and movable between at least an inactive configuration, wherein said second thrust chamber (18) is put in communication with said additional channel (11) and is isolated from said unloading channel (12), and an active configuration, wherein said second thrust chamber (18) is put in communication with said unloading channel (12) and is isolated from said additional channel (11);
- said activation element (15) being movable between at least:
• a normal operating position, corresponding to the operating condition wherein said additional channel (11) is under pressure and isolated from said unloading channel (12), the activation element itself moving in contrast to said elastic means (19) due to the pressure present in said first thrust chamber (17), and wherein said valve member (10) puts in communication said control channel (5) with said braking channel (6) and said accumulator (8) is loaded, an auxiliary channel (20) being provided communicating with said control channel (5) and with said accumulator (8) and along which are arranged one-way valve means (21) able to prevent the transit of the work fluid from the accumulator (8) to the control channel itself;
• an emergency position, corresponding to the operating condition wherein there is a decrease in pressure in said additional channel (11) or the connection of the latter with said unloading channel (12) as a result of the exit of the second male coupling from the relative second female coupling or with said second thrust chamber (18) as a result of the displacement of said solenoid valve (13) to the inactive position, wherein the activation element itself is moved due to said elastic means (19) bringing said valve member (10) to interact with said valve means (9) to open said supply channel (7) and wherein said braking channel (6) is isolated from said control channel (5) and is put in communication with the supply channel itself.

2. Valve assembly (1) according to claim 1, **characterized by** the fact that due to the increase in pressure in said first thrust chamber (17) said activation element (15) is able to move away from said first seat (3).

3. Valve assembly (1) according to claim 1 or 2, **characterized in that** it comprises manual command means (24) operable to control the displacement of said activation element (15) to at least a predefined position within said second seat (4).

4. Valve assembly (1) according to claim 3, **characterized in that** said command means (24) are movable between a neutral position, wherein said activation element (15) is free to move between said normal operating position and said emergency position, and at least a first working position, wherein said activation element (15), when departing from said emergency position, is pushed in contrast to said elastic means (19) and said valve member (10) interrupts the connection between said braking channel (6), said control channel (5) and said supply channel (7).

5. Valve assembly (1) according to claim 4, **characterized in that** it comprises pumping means (25) arranged along said auxiliary channel (20) and operable, with said command means (24) in the first working position, to suck the work fluid present in said control channel (5) and send it to said accumulator (8); said pumping means (25) being also able to suck the work fluid present in said additional channel (11) in the case of the latter being put in communication with said unloading channel (12) as a result of the exit of the second male coupling from the relative second female coupling, said unloading channel (12) being in communication with said control channel (5).

6. Valve assembly (1) according to one or more of claims 4 to 5, **characterized in that** said command means (24) are also movable to a second working position, wherein said activation element (15) is pushed further in contrast to said elastic means (19) with respect to said first working position and said valve member (10) puts in communication said control channel (5) with said braking channel (6), said pumping means (25) being operable to suck the work fluid present along said braking channel (6) by means of said control channel (5) and send it to said accumulator (8).

7. Valve assembly (1) according to claim 6, **characterized in that** the position taken by said activation element (15) in said normal operating position is different from that taken by the same in the second working position of said command means (24).

8. Valve assembly (1) according to one or more of the preceding claims, **characterized in that** said normal operating position corresponds to an end-of-stroke position of said activation element (15) within said second seat (4).

9. Valve assembly (1) according to one or more of the preceding claims 3 to 8, **characterized in that** it comprises further elastic means (28) associated with said command means (24) and able to counteract the displacement from the neutral position to said working positions.

10. Valve assembly (1) according to one or more of the preceding claims 3 to 9, **characterized in that** said command means (24) comprise at least a knob (26) arranged externally to said body (2) and operable in rotation, said knob (26) being connected to a cam element (27) which interacts with said activation element (15).

11. Valve assembly (1) according to claims 9 and 10, **characterized in that** said further elastic means (28) are placed between said body (2) and said knob (26) and are able to apply on the latter a torque able to bring it back to the neutral position.

## Patentansprüche

1. Ventilanordnung (1), insbesondere für Anhänger, die eine erste und zweite aufnehmende Kupplung umfasst, die jeweils mit einer ersten und zweiten einzusteckenden Kupplung, die dem Zugfahrzeug zugeordnet sind, verbindbar sind, wobei die aufnehmende Kupplung mit einer Steuerleitung des Bremssystems des Anhängers selbst in Verbindung steht und wobei die zweite aufnehmende Kupplung mindestens mit einer zusätzlichen Leitung, die auf die Feststell- und/oder Automatikbremse des Anhängers einwirkt, und mindestens mit einer Umgehungsleitung, die mit einer Entlastungsleitung in Verbindung steht, in Verbindung steht, Ventilmittel, die so bereitgestellt sind, dass sie als Folge auf den Austritt der zweiten einzusteckenden Kupplung aus der zweiten aufnehmenden Kupplung die zusätzliche Leitung mit der Umgehungsleitung in Verbindung setzen können, umfassend:
- einen Körper (2) in dem ein erster Sitz (3) definiert ist, der mit Folgendem in Verbindung steht:
• mindestens einem Steuerkanal (5), der mit der Steuerleitung des Anhängers verbunden werden kann;
• mindestens einem Bremskanal (6), der mit dem Bremssystem des Anhängers verbunden werden kann;
• mindestens einem Versorgungskanal (7), der mit einem Hydraulikspeicher (8) verbunden ist, wobei Ventilmittel (9) bereitgestellt sind, die den Versorgungskanal (7) öffnen/schließen können;
und mindestens einen zweiten Sitz (4), der mit Folgendem in Verbindung steht:
• mindestens einem zusätzlichen Kanal (11), der mit der zusätzlichen Leitung des Anhängers verbunden werden kann;
• mindestens einem Entlastungskanal (12), der mit der Entlastungsleitung des Anhängers verbunden werden kann;
**dadurch gekennzeichnet, dass** es Folgendes umfasst:
- ein Ventilelement (10), das bewegbar in dem ersten Sitz (3) angeordnet ist;
- mindestens ein Aktivierungselement (15), das bewegbar in dem zweiten Sitz (4) angeordnet ist und mit dem Ventilelement (10) zusammenwirken kann, um es entlang des ersten Sitzes (3) zu bewegen, wobei in dem zweiten Sitz (4) mindestens eine erste Schubkammer (17) definiert ist, die mit dem zusätzlichen Kanal (11) in Verbindung steht und auf das Aktivierungselement (15) einwirkt, und mindestens eine zweite Schubkammer (18), die auf das Aktivierungselement (15) auf der gegenüberliegenden Seite der ersten Schubkammer (17) einwirkt, wobei elastische Mittel (19) ebenfalls so bereitgestellt sind, dass sie, im Gegensatz zur Wirkung der ersten Schubkammer (17), auf das Aktivierungselement selbst einwirken können;
- mindestens ein Solenoidventil (13), das mit der Versorgung des Zugfahrzeugs verbunden werden kann und zwischen mindestens einer inaktiven Konfiguration, in der die zweite Schubkammer (18) mit dem zusätzlichen Kanal (11) in Verbindung gesetzt ist und von dem Entlastungskanal (12) getrennt ist, und einer aktiven Konfiguration bewegbar ist, in der die zweite Schubkammer (18) mit dem Entlastungskanal (12) in Verbindung gebracht ist und von dem zusätzlichen Kanal (11) getrennt ist;
- das Aktivierungselement (15) mindestens bewegbar ist zwischen:
• einer normalen Betriebsstellung, die dem Betriebszustand entspricht, in dem der zusätzliche Kanal (11) unter Druck steht und von dem Entlastungskanal (12) getrennt ist, wobei sich das Aktivierungselement selbst im Gegensatz zum elastischen Mittel (19) aufgrund des in der ersten Schubkammer (17) vorhandenen Drucks bewegt, und wobei das Ventilelement (10) den Steuerkanal (5) in Verbindung mit dem Bremskanal (6) bringt und der Akkumulator (8) geladen ist, wobei ein Hilfskanal (20) bereitgestellt ist, der in Verbindung mit dem Steuerkanal (5) und dem Akkumulator (8) steht und entlang dessen Einwegventilmittel (21) angeordnet sind, die den Übergang des Arbeitsfluids vom Akkumulator (8) zum Steuerkanal selbst verhindern können;
• einer Notstellung, die dem Betriebszustand entspricht, wobei ein Druckabfall in dem zusätzlichen Kanal (11) oder der Verbindung des letzteren mit dem Entlastungskanal (12) infolge des Austritts der zweiten einzusteckenden Kupplung aus der entsprechenden zweiten aufnehmenden Kupplung oder mit der zweiten Schubkammer (18) infolge der Verschiebung des Solenoidventils (13) in die inaktive Stellung auftritt, wobei das Aktivierungselement selbst durch die elastischen Mittel (19) bewegt wird, die das Ventilelement (10) zum Zusammenwirken mit den Ventilmitteln (9) zum Öffnen des Versorgungskanals (7) veranlassen und wobei der Bremskanal (6) vom Steuerkanal (5) getrennt ist und in Verbindung mit dem Versorgungskanal selbst gebracht ist.

2. Ventilanordnung (1) nach Anspruch 1, die durch die Tatsache gekennzeichnet ist, dass sich das Aktivierungselement (15) durch den Druckanstieg in der ersten Schubkammer (17) von dem ersten Sitz (3) weg zu bewegen kann.

3. Ventilanordnung (1) nach Anspruch 1 oder 2, **dadurch gekennzeichnet, dass** sie manuelle Befehlsmittel (24) umfasst, die bedienbar sind, um die Verschiebung der Aktivierungsmittel (15) zu mindestens einer vorgegebenen Position innerhalb des zweiten Sitzes (4) zu steuern.

4. Ventilanordnung (1) nach Anspruch 3, **dadurch gekennzeichnet, dass** die Befehlsmittel (24) zwischen einer neutralen Stellung, in der das Aktivierungselement (15) zwischen der normalen Betriebsstellung und der Notbetriebsstellung frei beweglich ist, und mindestens einer ersten Arbeitsstellung bewegt werden können, in der das Aktivierungselement (15), wenn es die Notstellung verlässt, im Gegensatz zu den elastischen Mitteln (19) angeschoben wird, und das Ventilelement (10) die Verbindung zwischen dem Bremskanal (6), dem Steuerkanal (5) und dem Versorgungskanal (7) unterbricht.

5. Ventilanordnung (1) nach Anspruch 4, **dadurch gekennzeichnet, dass** sie Pumpmittel (25) umfasst, die entlang des Hilfskanals (20) angeordnet sind und, wenn sich die Befehlsmittel (24) in der ersten Arbeitsstellung befinden, bedienbar sind, um das Arbeitsfluid, das in dem Steuerkanal (5) vorhanden ist, anzusaugen und es an den Akkumulator (8) zu leiten; wobei die Pumpmittel (25) auch das in dem zusätzlichen Kanal (11) vorhandene Arbeitsfluid ansaugen können, wenn letzteres infolge des Austritts der zweiten einzusteckenden Kupplung aus der entsprechenden aufnehmenden Kupplung in Verbindung mit dem Entlastungskanal (12) gebracht ist, wobei der Entlastungskanal (12) mit dem Steuerkanal (5) in Verbindung steht.

6. Ventilanordnung (1) nach einem oder mehreren der Ansprüche 4 bis 5, **dadurch gekennzeichnet, dass** die Befehlsmittel (24) auch in eine zweite Arbeitsstellung bewegt werden können, wobei das Aktivierungselement (15) im Gegensatz zu den elastischen Mittel (19) in Bezug auf die erste Arbeitsstellung weiter geschoben wird, und das Ventilelement (10) den Steuerkanal (5) mit dem Bremskanal (6) in Verbindung bringt, wobei die Pumpmittel (25) bedienbar sind, um das Arbeitsfluid, das entlang dem Bremskanal (6) vorhanden ist, mittels dem Steuerkanal (5) anzusaugen und es an den Akkumulator (8) zu leiten.

7. Ventilanordnung (1) nach Anspruch 6, **dadurch gekennzeichnet, dass** die Stellung, die durch das Aktivierungselement (15) in der normalen Betriebsstellung eingenommen wird, von derjenigen abweicht, die von selbigem in der zweiten Arbeitsstellung der Befehlsmittel (24) eingenommen wird.

8. Ventilanordnung (1) nach einem oder mehreren der vorhergehenden Ansprüche, **dadurch gekennzeichnet, dass** die normale Betriebsstellung einer Hubende-Stellung des Aktivierungselements (15) innerhalb des zweiten Sitzes (4) entspricht.

9. Ventilanordnung (1) nach einem oder mehreren der vorhergehenden Ansprüche 3 bis 8,
**dadurch gekennzeichnet, dass** sie weitere elastische Mittel (28) umfasst, die mit den Befehlsmittel (24) verbunden sind und der Verschiebung von der neutralen Stellung in die Arbeitsstellungen entgegenwirken können.

10. Ventilanordnung (1) nach einem oder mehreren der vorhergehenden Ansprüche 3 bis 9,
**dadurch gekennzeichnet, dass** die Befehlsmittel (24) mindestens einen Knopf (26) umfassen, der außen an dem Körper (2) angeordnet ist und in Drehung versetzt werden kann, wobei der Knopf (26) mit einem Nockenelement (27) verbunden ist, das mit dem Aktivierungselement (15) zusammenwirkt.

11. Ventilanordnung (1) nach Anspruch 9 und 10,
**dadurch gekennzeichnet, dass** die weiteren elastischen Mittel (28) zwischen dem Körper (2) und dem Knopf (26) angeordnet sind und auf Letzteren eine Drehkraft auszuüben können, die ihn in die neutrale Stellung zurückversetzen kann.

## Revendications

1. Ensemble à soupape (1), particulièrement pour des remorques, comprenant des premier et second accouplements femelles raccordables, respectivement, à des premier et second accouplements mâles associés au véhicule de remorquage, où le premier accouplement femelle communique avec une conduite de commande du système de freinage de la remorque elle-même et où le second accouplement femelle communique avec au moins une conduite supplémentaire agissant sur le frein de stationnement et/ou automatique de la remorque et avec au moins une conduite de dérivation communiquant avec une conduite de déchargement, des moyens de soupape étant prévus, capables de mettre en communication la conduite supplémentaire avec la conduite de dérivation en conséquence de la sortie du second accouplement mâle à partir du second accouplement femelle, comprenant :
- un corps (2) à l'intérieur duquel est défini un premier siège (3) communiquant avec :
• au moins un canal de commande (5) raccordable à ladite conduite de commande de la remorque ;
• au moins un canal de freinage (6), raccordable au système de freinage de la remorque ;
• au moins un canal d'alimentation (7) raccordé à un accumulateur hydraulique (8), des moyens de soupape (9) étant prévus, capables d'ouvrir/de fermer ledit canal d'alimentation (7) ; et
au moins un second siège (4) communiquant avec :
• au moins un canal supplémentaire (11) raccordable à ladite conduite supplémentaire de la remorque ;
• au moins un canal de déchargement (12) raccordable à ladite conduite de déchargement de la remorque ;
**caractérisé en ce qu'**il comprend :
- un élément de soupape (10) logé, mobile, à l'intérieur dudit premier siège (3) ;
- au moins un élément d'activation (15) logé, mobile, à l'intérieur dudit second siège (4) et capable d'interagir avec ledit élément de soupape (10), pour le déplacer le long dudit premier siège (3), à l'intérieur dudit second siège (4) étant définies au moins une première chambre de poussée (17) communiquant avec ledit canal supplémentaire (11) et agissant sur ledit élément d'activation (15) et au moins une seconde chambre de poussée (18) agissant sur ledit élément d'activation (15) sur le côté opposé de ladite première chambre de poussée (17), des moyens élastiques (19) étant également prévus, capables d'agir sur l'élément d'activation lui-même par opposition à l'action de ladite première chambre de poussée (17) ;
- au moins une soupape à solénoïde (13) raccordable à l'alimentation du véhicule de remorquage et mobile entre au moins une configuration inactive, dans laquelle ladite seconde chambre de poussée (18) est mise en communication avec ledit canal supplémentaire (11) et est isolée dudit canal de déchargement (12), et une configuration active, dans laquelle ladite seconde chambre de poussée (18) est mise en communication avec ledit canal de déchargement (12) et est isolée dudit canal supplémentaire (11) ;
- ledit élément d'activation (15) étant mobile entre au moins :
• une position de fonctionnement normale, correspondant à la condition de fonctionnement, dans laquelle ledit canal supplémentaire (11) est sous pression et isolé dudit canal de déchargement (12), l'élément d'activation lui-même se déplaçant par opposition auxdits moyens élastiques (19) en raison de la pression présente dans ladite première chambre de poussée (17), et dans laquelle ledit élément de soupape (10) met en communication ledit canal de commande (5) avec ledit canal de freinage (6) et ledit accumulateur (8) est chargé, un canal auxiliaire (20) étant prévu, communiquant avec ledit canal de commande (5) et avec ledit accumulateur (8), et le long duquel sont agencés des moyens de soupape de non-retour (21) capables d'empêcher le transit du fluide actif de l'accumulateur (8) au canal de commande lui-même ;
• une position d'urgence, correspondant à la condition de fonctionnement, dans laquelle il y a une réduction de pression dans ledit canal supplémentaire (11) ou le raccordement de ce dernier audit canal de déchargement (12) en conséquence de la sortie du second accouplement mâle à partir du second accouplement femelle relatif ou à ladite seconde chambre de poussée (18) en conséquence du déplacement de ladite soupape à solénoïde (13) jusqu'à la position inactive, dans laquelle l'élément d'activation lui-même est déplacé en raison du fait que lesdits moyens élastiques (19) mettent ledit élément de soupape (10) en interaction avec lesdits moyens de soupape (9) pour ouvrir ledit canal d'alimentation (7), et dans laquelle ledit canal de freinage (6) est isolé dudit canal de commande (5) et est mis en communication avec le canal d'alimentation lui-même.

2. Ensemble à soupape (1) selon la revendication 1, **caractérisé par le fait que**, en raison de l'augmentation de pression dans ladite première chambre de poussée (17), ledit élément d'activation (15) est capable de s'éloigner dudit premier siège (3).

3. Ensemble à soupape (1) selon la revendication 1 ou 2, **caractérisé en ce qu'**il comprend des moyens d'instruction manuels (24) utilisables pour commander le déplacement dudit élément d'activation (15) jusqu'à au moins une position prédéfinie à l'intérieur dudit second siège (4).

4. Ensemble à soupape (1) selon la revendication 3, **caractérisé en ce que** lesdits moyens d'instruction (24) sont mobiles entre une position neutre, dans laquelle ledit élément d'activation (15) est libre de se déplacer entre ladite position de fonctionnement normale et ladite position d'urgence, et au moins une première position de fonctionnement, dans laquelle ledit élément d'activation (15), lorsqu'il quitte ladite position d'urgence, est poussé par opposition auxdits moyens élastiques (19) et ledit élément de soupape (10) interrompt le raccordement entre ledit canal de freinage (6), ledit canal de commande (5) et ledit canal d'alimentation (7).

5. Ensemble à soupape (1) selon la revendication 4, **caractérisé en ce qu'**il comprend des moyens de pompage (25) agencés le long dudit canal auxiliaire (20) et utilisables, avec lesdits moyens d'instruction (24) dans la première position de fonctionnement, pour aspirer le fluide actif présent dans ledit canal de commande (5) et l'envoyer audit accumulateur (8) ; lesdits moyens de pompage (25) étant également capables d'aspirer le fluide actif présent dans ledit canal supplémentaire (11) au cas où ce dernier est mis en communication avec ledit canal de déchargement (12) en conséquence de la sortie du second accouplement mâle à partir du second accouplement femelle relatif, ledit canal de déchargement (12) étant en communication avec ledit canal de commande (5).

6. Ensemble à soupape (1) selon une ou plusieurs des revendications 4 à 5, **caractérisé en ce que** lesdits moyens d'instruction (24) sont également mobiles jusqu'à une seconde position de fonctionnement, dans lequel ledit élément d'activation (15) est poussé davantage par opposition auxdits moyens élastiques (19) par rapport à ladite première position de fonctionnement et ledit élément de soupape (10) met en communication ledit canal de commande (5) avec ledit canal de freinage (6), lesdits moyens de pompage (25) étant utilisables pour aspirer le fluide actif présent le long dudit canal de freinage (6) au moyen dudit canal de commande (5) et l'envoyer audit accumulateur (8).

7. Ensemble à soupape (1) selon la revendication 6, **caractérisé en ce que** la position prise par ledit élément d'activation (15) dans ladite position de fonctionnement normale est différente de celle prise par celui-ci dans la seconde position de fonctionnement desdits moyens d'instruction (24).

8. Ensemble à soupape (1) selon une ou plusieurs des revendications précédentes, **caractérisé en ce que** ladite position de fonctionnement normale correspond à une position de fin de course dudit élément d'activation (15) à l'intérieur dudit second siège (4).

9. Ensemble à soupape (1) selon une ou plusieurs des revendications précédentes 3 à 8, **caractérisé en ce qu'**il comprend des moyens élastiques supplémentaires (28) associés auxdits moyens d'instruction (24) et capables de contrer le déplacement de la position neutre auxdites positions de fonctionnement.

10. Ensemble à soupape (1) selon une ou plusieurs des revendications précédentes 3 à 9, **caractérisé en ce que** lesdits moyens d'instruction (24) comprennent au moins un bouton (26) agencé extérieurement audit corps (2) et utilisable en rotation, ledit bouton (26) étant raccordé à un élément à came (27) qui interagit avec ledit élément d'activation (15).

11. Ensemble à soupape (1) selon les revendications 9 et 10, **caractérisé en ce que** lesdits moyens élastiques supplémentaires (28) sont placés entre ledit corps (2) et ledit bouton (26) et sont capables d'appliquer sur ce dernier un couple capable de le remettre dans la position neutre.
